# EUROPEAN PATENT SPECIFICATION

(11) **EP 2 481 543 B1**
(45) Date of publication and mention of the grant of the patent: **16.03.2016**
(21) Application number: 11189303.8
(22) Date of filing: 16.11.2011
(51) Int. Cl.: B28D 1/22, B28D 5/00, C03B 33/07, C03B 33/10

(54) **A method for scribing a brittle material substrate**
Verfahren zum Anreißen eines Substrats aus brüchigem Material
Procédé pour graver un substrat de matériau fragile

(30) Priority: 27.01.2011 JP 2011015447
(43) Date of publication of application: 01.08.2012
(73) Proprietor: Mitsuboshi Diamond Industrial Co., Ltd., Suita-city, Osaka Pref. 564-0044 (JP)
(72) Inventor: Kawabata, Takashi, Suita-city, Osaka 564-0044 (JP)
(74) Representative: TBK

(56) References cited:
- EP-A1- 1 712 339
- EP-A2- 2 279 983
- WO-A1-2009/128334
- JP-A- 2008 116 969
- TW-A- 201 109 283
- US-A- 3 795 572

## Description

### Technical Field

The invention relates to a method for scribing a brittle material substrate according to the preamble of claim 1.

In the following descriptions, not only the coating layer, such as a resin film layer, on the surface of the substrate but also the coating layer resulting from the application of paint or a resin is referred to as resin layer.

### Background Art

A method for rolling a cutter wheel (also referred to as scribing wheel) over the surface of a substrate in such a state that the cutter wheel is pressed against the surface has been generally known as a method for creating a scribing line before the brittle material substrate, such as of glass, is cut along the line, and this method is disclosed in Patent Document 1, for example.

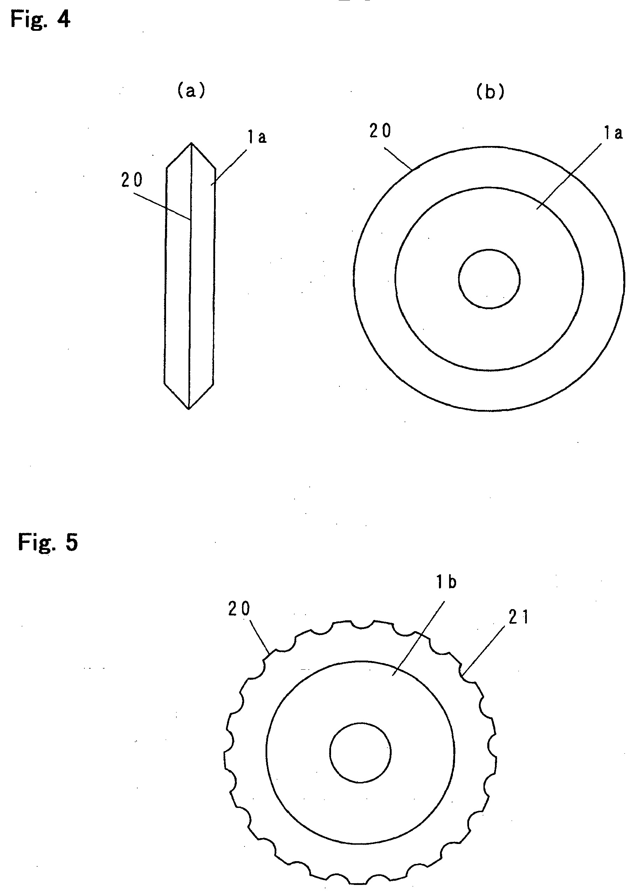

Cutter wheels for creating a scribe line on a glass substrate include a cutter wheel 1a where the blade ridge line 20 has a smooth finish as shown in Fig 4 (hereinafter referred to as normal cutter wheel) and a cutter wheel 1b where notches 21 are provided along the blade ridge line 20 as shown in Fig 5 (hereinafter referred to as cutter wheel with notches). Examples of the latter cutter wheel with notches 1b are the Penett cutter wheel made by Mitsuboshi Diamond Industrial Co., Ltd., and the APIO cutter wheel (registered trademarks).

General cutter wheels for scribing a glass substrate from which the bare surface (without a resin layer) is exposed, whether they are normal cutter wheels or cutter wheels with notches, have a large blade ridge line angle, typically from 100° to 160°, in order for the force applied to the surface of the substrate in the direction perpendicular to the surface of the substrate to be great than the force applied to the surface of the substrate in the direction parallel to the surface of the substrate so that a scribe trench can be created without fail when the cutter wheel is rolled over and pressed against the substrate. In the case where the cutter wheel has a blade ridge line angle smaller than 90°, it is difficult to create a good scribe trench because a scribe trench cannot be created when the force is too small, while the substrate suddenly cracks in an irregular direction, such as a parallel crack, when the force is too large.

Meanwhile, in the case where a cutter wheel having a large blade ridge line angle (from 100 ° to 160 °) is rolled over a glass substrate with a resin layer formed on the surface, part of the blade surface is pressed against not only the substrate but also the resin layer in the direction perpendicular to the surface with a large force, and thus part of the resin layer that makes contact with the blade surface is irregularly torn.

Accordingly, glass substrates on which a resin layer is formed cannot be scribed by using a general cutter wheel for glass.

According to the prior art, the resin layer is cut with a fixed-blade having a small blade angle (from 30 ° to 90 °) that is appropriate for cutting a resin layer, and after that a scribe line is created using a cutter wheel having a large blade angle (from 100 ° to 160 °) that is appropriate for a glass substrate.

As an alternative method, such a means has been adopted where a scribe line is created using a cutter wheel having a large blade ridge line angle that is appropriate for a glass substrate on the surface of the glass on the side opposite to the resin layer, and then the resin layer is cut using a fixed blade having a small blade ridge line angle (from 30 ° to 90 °) that is appropriate for cutting a resin layer on the opposite surface, that is to say, on the surface on which the resin layer is formed.

### Prior Art Document

### Patent Document

Patent Document 1: Japanese Patent No. 3074143

### Summary of the Invention

### Problem to Be Solved by the Invention

In the above-described conventional method for scribing a glass substrate on which a resin layer is formed, it is necessary to use two types of blades, one for scribing the substrate and another for cutting the resin layer, and accordingly an alignment task for making the traces of these blades the same or a blade attaching mechanism for the alignment is necessary. In addition, it is necessary to carry out two steps in sequence, the step of cutting the resin layer and the step of scribing the substrate, which make the task complicated.

Thus, an object of the present invention is to provide a method for scribing a brittle material substrate, such as a glass substrate, on which a resin layer is formed according to which a scribe line can be created efficiently without fail.

### Means for Solving Problem

In order to achieve the above-described object, the present invention provides the following technical means. The scribing method according to the present invention is a scribing method according to which a scribe line is created by rolling a cutter wheel over a brittle material substrate having a resin layer on an upper surface, wherein the above-described cutter wheel for scribing has the following structure. That is to say, the cutter wheel (cutter wheel with notches) has a two-part blade surface made of a first blade surface on the left and right sides where a ridge line having a first ridge line angle θ₁ forms the outer periphery of a circle and a second blade surface on the left and right sides that continues to the bottom of the first surface, the second ridge line angle θ₂ formed between the left and right sides of the second surface is smaller than the first ridge line angle θ₁ formed between the left and right sides of the first surface, the first ridge line angle θ₁ is appropriate for the first blade surface to create a scribe line on the above-described substrate, and the second ridge line angle θ₂ is appropriate for the second blade surface to cut the resin layer, the depth of the first blade surface is smaller than the thickness of the resin layer on the above-described brittle material substrate, and a number of notches are periodically created along the ridge line of the first blade surface.

Thus, according to the present invention, this cutter wheel is rolled over and pressed against the resin layer on the above-described brittle material substrate so that the resin layer is cut by the second blade surface, and at the same time the top ridge line portion of the first blade surface bites into the brittle material substrate so as to create a scribe line.

Here, the "angle appropriate for creating a scribe line on the brittle material substrate" and the "angle appropriate for cutting the resin layer" are determined on the basis of the substrate material to be scribed and the type of resin layer. The former blade ridge line angle is always greater than the latter. The former blade ridge line angle may be experimentally found by scribing a brittle material substrate- having no resin layer with a normal cutter wheel, and the latter blade ridge line angle may be experimentally found by scribing only a resin layer with a normal cutter wheel.

According to the present invention, when a cutter wheel is rolled over and pressed against the upper surface of a brittle material substrate having a resin layer on the upper surface, first, the ridge line formed between the two sides of the first blade surface, that is to say, the blade edge bites into the resin layer, and subsequently the second blade surface immediately reaches the resin layer because the depth L of the first blade surface that forms this blade edge is smaller than the thickness of the resin layer. This second blade surface has a second ridge line angle θ₂ between the left and right sides of the second blade surface, which is smaller than the first ridge line angle θ₁ and appropriate for the second blade surface to cut the resin layer, and therefore the resin layer can be cut cleanly and the cut surfaces are not irregularly torn.

Furthermore, when the blade edge penetrates through the resin layer so as to reach the surface of the brittle material substrate, a scribe trench can be created without creating any cracks in the brittle material substrate because the ridge line angle at the blade edge formed between the left and right sides of the first blade surface is appropriate for scribing a glass substrate.

Here, the cutter wheel has a number of notches periodically created along the ridge line of the first blade surface so that it becomes easy for the first blade surface to bite into the substrate without slipping on the substrate, and at the same time horizontal cracking can be prevented from occurring.

This is because normal cutter wheels have a significant tendency to cause horizontal cracking as the load increases and tend to cause horizontal cracking even when a small load is applied as compared to cutter wheels with notches.

In order to scribe a substrate having a resin layer formed on the upper surface, it is necessary to apply a load that is greater than the load for scribing a substrate having no resin layer by the amount required to cut the resin layer. In the case where a normal cutter wheel is used, it is necessary to apply a large load in order to cut the resin layer, and thus a large load is also applied to the substrate, which makes it easy for a horizontal crack to occur. In order to avoid this, a cutter wheel with notches that makes it difficult for a horizontal crack to occur is used.

### Effects of the Invention

According to the present invention, the second blade surface bites into the resin layer so that the resin layer is cut by the second blade surface, and the blade edge of the first blade surface that has penetrated through the resin layer is pressed against the surface of the substrate, and therefore one-time scribing by one cutter wheel is enough to cut the resin layer, and at the same time create a scribe line on the glass material, and thus the operation can be simplified and the time for operation can be shortened.

In the above-described invention, the first ridge line angle θ₁ of the cutter wheel may be 100 ° to 160 ° and the second ridge line angle θ₂ may be 30 ° to 90 °.

When the first ridge line angle θ₁ is 100 ° to 160 °, the ridge line (blade edge) is appropriate for scribing the substrate, while when the second ridge line angle θ₂ is 30 ° to 90°, the second blade surface is appropriate for cutting the resin layer. When the angles are in these ranges, it is possible to carry out a process on not only glass substrates but also most brittle material substrates and the resin layers formed on their surfaces.

In the above-described invention, it is preferable for the resin layer on the upper surface of the brittle material substrate to be 0.05 mm to 0.2 mm.

When the resin layer (resin film layer or application layer) formed on the surface of the substrate has a thickness as described above, it can function as a protective layer or a decorative layer, and in addition the resin layer can be cut without applying an excessive force when the cutter wheel is pressed against the substrate, and thus no excessive force is applied to the glass surface so that the resin layer can be cut, and at the same time the glass substrate is scribed without fail.

### Brief Description of the Drawings

Figs 1(a) and 1(b) are side and front diagrams showing a cutter wheel used in the scribing method according to the present invention;
Fig 2 is a cross-sectional diagram showing an enlargement of a main portion of the cutter wheel in Figs 1(a) and 1(b);
Figs 3(a) to 3(c) are cross-sectional diagrams showing a glass substrate when being scribed by a cutter wheel;
Figs 4(a) and 4(b) are front and side diagrams showing a conventional normal cutter wheel; and
Fig 5 is a side diagram showing a conventional cutter wheel with notches.

### Best Mode for Carrying Out the Invention

In the following, the scribing method for a glass substrate according to the present invention is described in detail in reference to the drawings.

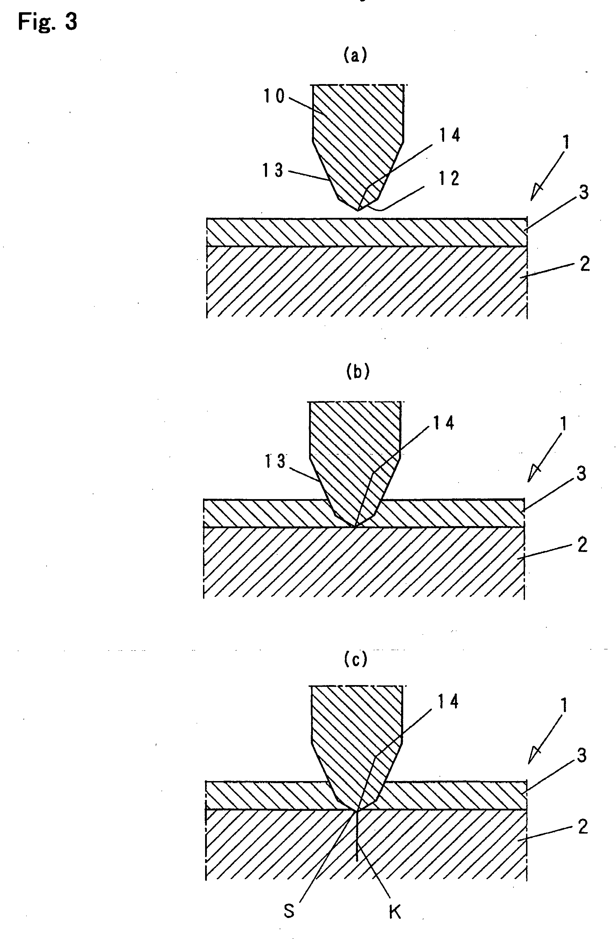

Here, the scribing method according to the present invention is described when a thick, colored glass plate with a resin layer on the surface used as a building material is scribed. As shown in Figs 3(a) to 3(c), this colored glass plate 1 is made of a glass material 2 having a thickness of 4 mm to 15 mm that is provided with a thin resin layer 3 having a thickness of approximately 0.1 mm (the thickness may be in a range from 0.05 mm to 0.2 mm). This resin layer 3 includes an application layer for coloring or a protective resin film pasted to the upper surface.

Though a horizontal crack on the surface may be a problem with the substrate as a building material, a polishing process can be carried out on the end surfaces after the substrate is cut because the plate is thick, and therefore it is not necessary to worry about the strength on the end surface. Accordingly, there is no problem with the difference in the strength on the end surface when a normal wheel and a wheel with notches cut the substrate.

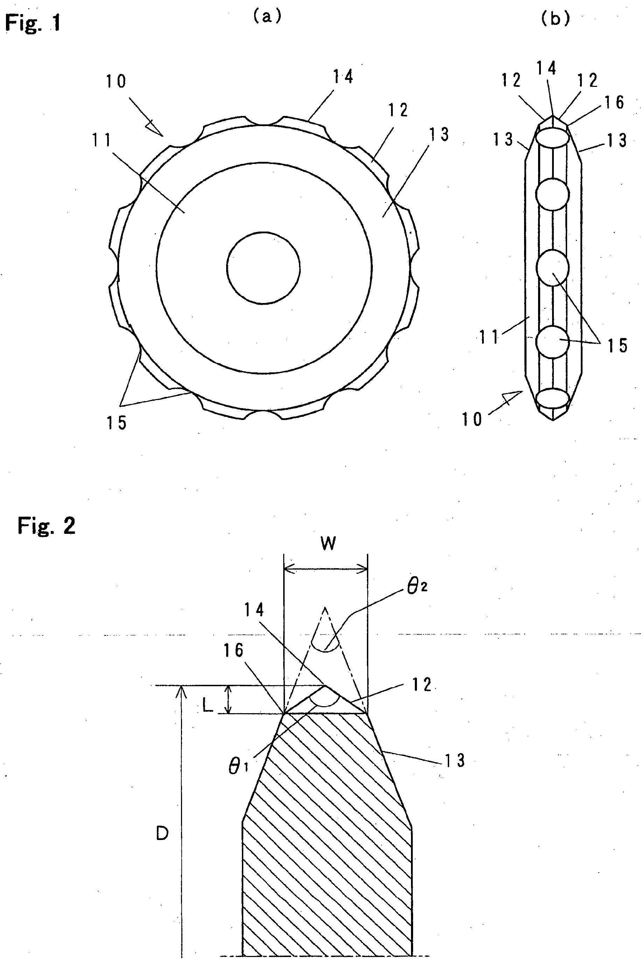

Figs 1 (a) and 1 (b) show a cutter wheel with notches used in the method according to the present invention, where Fig 1(a) is a side diagram and Fig 1(b) is a front diagram. In addition, Fig 2 is a cross-sectional diagram showing an enlargement of a main portion of the cutter wheel with notches.

A cutter wheel 10 is made of the main body of the wheel 11 in disc form made of a hard metal or sintered diamond and a two-part blade surface made of a first blade surface 12 and a second blade surface 13 that continues to the bottom of the first blade surface 12. The main body of the wheel 11 has an outer diameter D in a range from 2 mm to 10 mm.

The first blade surface 12 forms a ridge line having a first fridge line angle θ₁ along the outer periphery of the main body of the wheel 11, and the ridge line becomes the blade edge 14. The first ridge line angle θ₁, that is to say, the blade edge angle of the blade edge 14, is appropriate for scribing a thick plate glass material 2. This angle is in a range from 100 ° to 160 °, which is relatively large, and the majority of the load for pressing is directed in the direction perpendicular to the substrate and works as a force for pressing.

The second blade surface 13 forms a second ridge line angle θ₂ between the left and right side of the second blade surface 13. This second ridge line angle θ₂ is smaller than the first ridge line angle θ₁ and is appropriate for the second blade surface 13 to cut the resin layer 3. Typically, the second ridge line angle θ₂ is in a range from 30 ° to 90 °, which is relatively small.

The minimum width W of the second blade surface 13 is determined by the depth L of the first blade surface 12 (the distance between the blade edge 14 and the borderline 16 between the first blade surface 12 and the second blade surface 13 in the perpendicular direction) in the geometric relation with the first ridge line angle θ₁. The depth L of this first blade surface 12 is smaller than the thickness of the resin layer 3 on the substrate to be scribed. As a result, when the cutter wheel 10 bites into the resin layer 3, the second blade surface 13 reaches the resin layer 3 so that the resin layer 3 can be cut by the second blade surface.

In addition, notches 15 are periodically created along the ridge line, which is the blade edge 14, and thus a cutter wheel with notches is formed.

As in the conventional cutter wheels with notches, the notches 15 can prevent the blade edge from slipping on the surface of the substrate, and the depth thereof (distance between the blade edge 14 and the bottom of the notches in the perpendicular direction) is 2 µm to 10 µm, for example.

Figs 1(a) to 2 are schematic diagrams where features are exaggerated in order to describe the outline of the components in an easier way and do not show the actual scale. For example, the number, depth and intervals of the notches are relatively great as compared to the diameter of the cutter wheel 10 in these drawings.

When the thus-formed cutter wheel 10 is rolled over and pressed against the surface of the glass plate 1 on the resin layer 3 side as shown in Figs 3(a) to 3(c), the blade edge 14 bites into the resin layer 3. Subsequently, the second blade surface 13 immediately reaches the resin layer 3 because the depth L of the first blade surface 12 that forms this blade edge 14 is smaller (shallower) than the thickness of the resin layer 3 (see Fig 3(b)). The second blade surface 13 forms a second ridge line angle θ₂, which is appropriate for cutting the resin layer 3 and is a relatively small angle from 60 ° to 90 °, and therefore cuts the resin layer 3 well and does not irregularly tear the cut surfaces, and thus the cut surfaces are clean.

Next, when the blade edge 14 reaches the glass material 2, the blade edge 14 is rolled over the surface of the glass substrate without sliding so that a scribe line S can be created because the cutter wheel with notches has a large ridge line angle at the blade edge that is appropriate for scribing the glass plate, that is to say, has a blade edge ridge line angle in a range from 100 ° to 160 ° and a number of notches 15 periodically created along the ridge line that forms the blade edge 14 (see Fig 3(c)).

Though it is necessary to apply a load greater than that for scribing a substrate without a resin layer in the case where a resin layer is formed, a horizontal crack can be prevented from occurring because a cutter wheel with notches with which it is more difficult for a horizontal crack to occur than with a normal cutter wheel is used. As a result, a one-time scribing operation with one cutter wheel can cut the resin layer 3, and at the same time can create a scribe line on the glass material 2.

Though the typical embodiments of the present invention are described, the present invention is not necessarily limited to the above-described embodiments. For example, the object to be scribed is not limited to a glass substrate, but the invention can be applied to brittle material substrates in general, such as ceramic substrates having a resin layer on the surface.

The scribing method according to the present invention can be applied to a case where a substrate made of a brittle material, such as glass or ceramic, having a resin layer on the upper surface is scribed.

### Explanation of Symbols

- 1: glass plate
- 2: glass material
- 3: resin layer
- 10: cutter wheel
- 11: main body of wheel
- 12: first blade surface
- 13: second blade surface
- 14: blade edge (ridge line)
- 15: trench
- L: depth of first blade surface
- θ₁: first ridge line angle
- θ₂: second ridge line angle

[Object] To provide a method for scribing a brittle material substrate, such as a glass substrate, on which a resin layer is formed according to which a scribe line can be created efficiently without fail.

[Means for Achieving Object] A cutter wheel with notches 10 having a blade surface with two parts: one part having a first blade surface 12 with a first ridgeline angle θ1 between the left and right sides, the ridgeline being the outer periphery of the circular cutter wheel, and the other part having a second blade surface 13 that continues to the bottom of the first blade surface 12 on the left and right sides, where the first ridgeline angle θ1 is appropriate for cutting a brittle material substrate and the second blade surface 13 has an angle appropriate for cutting the resin layer, is provided, and this cutter wheel 10 is rolled over and pressed against the upper surface of a resin layer 3 so that the resin layer 3 is cut by the second blade surface 13, and at the same time the blade ridgeline of the first blade surface 12 bites into the substrate so as to create a scribe line.

## Claims

1. A scribing method for a brittle material substrate (2), according to which a scribe line is created by rolling a cutter wheel (10) over a brittle material substrate (2) having a resin layer (3) on an upper surface, **characterized in that**
said cutter wheel (10) has a two-part blade surface (12, 13) made of a first blade surface (12) on the left and right sides where a ridge line (14) having a first ridge line angle θ₁ forms the outer periphery of a circle and a second blade surface (13) on the left and right sides that continues to the bottom of the first surface (12),
the second ridge line angle θ₂ formed between the left and right sides of the second surface (13) is smaller than the first ridge line angle θ₁ formed between the left and right sides of the first surface, the first ridge line angle θ₁ is appropriate for the first blade surface (12) to create a scribe line on said substrate (1), and the second ridge line angle θ₂ is appropriate for the second blade surface (13) to cut the resin layer (3),
the depth of the first blade surface (12) is smaller than the thickness of the resin layer (3) on said brittle material substrate (1),
a number of notches (15) are periodically created along the ridge line (14) of the first blade surface (12), and
this cutter wheel (10) is rolled over and pressed against the resin layer (3) on said brittle material substrate (2) so that the resin layer (3) is cut by the second blade surface (13), and at the same time the top ridge line portion (14) of the first blade surface (12) bites into the brittle material substrate (2) so as to create a scribe line.

2. The scribing method for a brittle material substrate according to Claim 1, wherein the first ridge line angle θ₁ of the cutter wheel is 100 ° to 160 ° and the second ridge line angle θ₂ is 30 ° to 90 °.

3. The scribing method for a brittle material substrate according to Claim 1 or 2, wherein the resin layer on the upper surface of said brittle material substrate is 0.05 mm to 0.2 mm.

## Patentansprüche

1. Anreißverfahren für ein sprödes Materialsubstrat (2), gemäß dem eine Anreißlinie durch Rollen eines Schneidrads (10) über ein sprödes Materialsubstrat (2) erzeugt wird, das eine Harzschicht (3) auf einer oberen Oberfläche aufweist,
**dadurch gekennzeichnet, dass**
das Schneidrad (10) eine zweiteilige Klingenfläche (12, 13), die aus einer ersten Klingenfläche (12) an linken und rechten Seiten hergestellt ist, wo eine Kantenlinie (14), die einen ersten Kantenlinienwinkel θ₁ aufweist, den äußeren Rand eines Kreises bildet, und einer zweiten Klingenfläche (13) auf den linken und rechten Seiten, die sich zu dem Boden der ersten Fläche (12) fortsetzt,
der zweite Kantenlinienwinkel θ₂, der zwischen den linken und rechten Seiten der zweiten Fläche (13) ausgebildet ist, kleiner als der erste Kantenlinienwinkel θ₁ ist, der zwischen den linken und rechten Seiten der ersten Fläche ausgebildet ist, wobei der erste Kantenlinienwinkel θ₁ für die erste Klingenfläche (12) geeignet ist, um eine Anreißlinie auf dem Substrat (1) zu erzeugen, und der zweite Kantenlinienwinkel θ₂ für die zweite Klingenfläche (13) zum Schneiden der Harzschicht (3) geeignet ist,
die Tiefe der ersten Klingenfläche (12) kleiner als die Dicke der Harzschicht (3) auf dem spröden Materialsubstrat (1) ist,
eine Anzahl Kerben (15) periodisch entlang der Kantenlinie (14) der ersten Klingenfläche (12) geschaffen ist, und
dieses Schneidrad (10) über die Harzschicht (3) auf dem spröden Materialsubstrat (2) gerollt und dagegen gedrückt wird, so dass die Harzschicht (3) durch die zweite Klingenfläche (13) geschnitten ist, und zu der gleichen Zeit der oberste Kantenlinienabschnitt (14) der ersten Klingenfläche (12) in das spröde Materialsubstrat (2) beisst, um eine Anreißlinie zu erschaffen.

2. Anreißverfahren für ein sprödes Materialsubstrat nach Anspruch 1, wobei der erste Kantenlinienwinkel θ₁ des Schneidrads 100° bis 160° beträgt und der zweite Kantenlinienwinkel θ₂ 30° bis 90° beträgt.

3. Anreißverfahren für ein sprödes Materialsubstrat nach Anspruch 1 oder 2, wobei die Harzschicht auf der oberen Oberfläche des spröden Materialsubstrats 0,05 mm bis 0,2 mm beträgt.

## Revendications

1. Procédé de gravure pour un substrat de matériau fragile (2), selon lequel une ligne de gravure est créée en roulant une roue de coupe (10) sur un substrat de matériau fragile (2) ayant une couche de résine (3) sur une surface supérieure, **caractérisé en ce que**
ladite roue de coupe (10) a une surface de lame en deux parties (12, 13) constituée d'une première surface de lame (12) sur les côtés gauche et droit où une ligne de crête (14) ayant un premier angle de ligne de crête θ₁ forme la périphérie extérieure d'un cercle et une deuxième surface de lame (13) sur les côtés gauche et droit qui continue jusqu'au bas de la première surface (12),
le deuxième angle de ligne de crête θ₂ formé entre les côtés gauche et droit de la deuxième surface (13) est plus petit que le premier angle de ligne de crête θ₁ formé entre les côtés gauche et droit de la première surface, le premier angle de ligne de crête θ₁ convient pour que la première surface de lame (12) crée une ligne de gravure sur ledit substrat (1), et le deuxième angle de ligne de crête θ₂ convient pour que la deuxième surface de lame (13) coupe la couche de résine (3),
la profondeur de la première surface de lame (12) est plus faible que l'épaisseur de la couche de résine (3) sur ledit substrat de matériau fragile (1),
un nombre d'encoches (15) sont créées périodiquement le long de la ligne de crête (14) de la première surface de lame (12), et
cette roue de coupe (10) est roulée sur et pressée contre la couche de résine (3) sur ledit substrat de matériau fragile (2) de sorte que la couche de résine (3) est coupée par la deuxième surface de lame (13), et dans le même temps la partie de ligne de crête du haut (14) de la première surface de lame (12) mord dans le substrat de matériau fragile (2) afin de créer une ligne de gravure.

2. Procédé de gravure pour un substrat de matériau fragile selon la revendication 1, dans lequel le premier angle de ligne de crête θ₁ de la roue de coupe est de 100° à 160° et le deuxième angle de ligne de crête θ₂ est de 30° à 90°.

3. Procédé de gravure pour un substrat de matériau fragile selon la revendication 1 ou 2, dans lequel la couche de résine sur la surface supérieure dudit substrat de matériau fragile est de 0,05 mm à 0,2 mm.
